# EUROPEAN PATENT APPLICATION

(11) **EP 4 145 555 A1**
(43) Date of publication of application: **08.03.2023**
(21) Application number: 21796652.2
(22) Date of filing: 26.04.2021
(51) Int. Cl.: H01M 4/13, H01M 4/131, H01M 4/139, H01M 4/36, H01M 4/505, H01M 4/525, H01M 4/62, H01M 10/052, H01M 10/0562

(54) **POSITIVE ELECTRODE MATERIAL AND BATTERY**

(30) Priority: 28.04.2020 JP 2020079492
(71) Applicant: Panasonic Intellectual Property Management Co., Ltd., Osaka-shi, Osaka 540-6207 (JP)
(72) Inventor: NAGAMINE, Kenta, Osaka-shi, Osaka (JP); MINEYA, Kunihiko, Osaka-shi, Osaka (JP); SASAKI, Izuru, Osaka-shi, Osaka (JP)
(74) Representative: Grünecker Patent- und Rechtsanwälte PartG mbB
(86) International application number: PCT/JP2021/016568
(87) International publication number: WO 2021/221001

(57) **Abstract**

A positive electrode material contains a positive electrode active material, a solid electrolyte, and a coating material for coating the positive electrode active material, wherein the coating material is denoted by Composition formula (1) below. LiₐA_{b}X_{c} (1). Herein, each of a, b, and c is a positive real number, A is at least one selected from the group consisting of N, P, and S, and X contains at least F.

## Description

### Technical Field

The present disclosure relates to a positive electrode material and a battery.

### Background Art

PTL 1 discloses an all-solid lithium battery in which a lithium-ion-conductive solid electrolyte is used as an electrolyte. This battery is characterized in that the lithium-ion-conductive solid electrolyte is composed mainly of a sulfide and that the surface of a positive electrode active material is coated with a lithium-ion-conductive oxide.

NPL 1 discloses a cause of the resistance of a battery increasing when a sulfide solid electrolyte is used.

### Citation List

### Patent Literature

PTL 1: International Publication No. 2007/004590

### Non Patent Literature

NPL 1: Chemistry of Materials, Am. Chem. Soc. 2010, Vol. 22, 3, 949-956

### Summary of Invention

### Technical Problem

In the related art, it is desired that the resistance of a battery be reduced.

### Solution to Problem

An aspect according to the present disclosure provides a positive electrode material including:
a positive electrode active material;
a solid electrolyte; and
a coating material for coating the positive electrode active material,
wherein the coating material is denoted by Composition formula (1) below,

   LiₐA_{b}X_{c} (1)
herein, each of a, b, and c is a positive real number,
A is at least one selected from the group consisting of N, P, and S, and
X contains at least F.

### Advantageous Effects of Invention

According to the present disclosure, the resistance of a battery can be reduced. Brief Description of Drawings
[Fig. 1] Fig. 1 is a schematic sectional view illustrating the configuration of a positive electrode material in a first embodiment.
[Fig. 2] Fig. 2 is a schematic sectional view illustrating the configuration of a battery in a second embodiment.
[Fig. 3] Fig. 3 is a graph illustrating F1s spectra based on X-ray photoelectron spectroscopy (XPS) of a coated active material and NCM of Example 3.
[Fig. 4] Fig. 4 is a graph illustrating the atomic ratio of F determined from an F1s spectrum based on XPS performed while the coated active material of Example 3 was etched using an argon ion beam.
[Fig. 5] Fig. 5 is a Nyquist diagram of a battery of Example 1 at 3.7 V. Description of Embodiments

### (Underlying knowledge forming basis of the present disclosure)

PTL 1 discloses that the surface of the positive electrode active material is coated with lithium niobate. Since the oxide such as lithium niobate is hard to dissolve in a solvent, a specific method such as a sol-gel method is necessary.

Most of inorganic compounds containing lithium do not exhibit lithium-ion conductivity in the solid state essentially. It is readily predicted that when the surface of the positive electrode active material is coated with a solid material which do not exhibit sufficient lithium-ion conductivity, transfer of lithium ions between a solid electrolyte and a positive electrode active material is hindered, and the resistance of a battery is increased.

However, the present inventors found that the surface of a positive electrode active material being coated with a specific coating material enables the resistance of a solid battery to be significantly reduced.

### (Outline of an aspect according to the present disclosure)

A positive electrode material according to a first aspect of the present disclosure includes
a positive electrode active material,
a solid electrolyte, and
a coating material for coating the positive electrode active material,
wherein the coating material is denoted by Composition formula (1) below,

   LiₐA_{b}X_{c} (1)
herein, each of a, b, and c is a positive real number,
A is at least one selected from the group consisting of N, P, and S, and
X contains at least F.

The positive electrode active material being coated with the coating material denoted by Composition formula (1) enables the resistance of a battery to be significantly reduced.

Regarding a second aspect of the present disclosure, for example, in the positive electrode material according to the first aspect, X may contain O and F in Formula (1). According to such a configuration, since a more favorable interface between the active material and the solid electrolyte can be formed, the resistance of the battery can be more effectively reduced.

Regarding a third aspect of the present disclosure, for example, in the positive electrode material according to the first or second aspect, the coating material may contain a SOₓF_{y} group. According to such a configuration, since a favorable coating layer is formed, the solid electrolyte can be suppressed from deteriorating, and the resistance of the battery can be more effectively reduced.

Regarding a fourth aspect of the present disclosure, for example, in the positive electrode material according to the third aspect, the coating material may contain Li, N, S, O, and F. According to such a configuration, since a more favorable interface between the active material and the solid electrolyte can be formed, the resistance of the battery can be more effectively reduced.

Regarding a fifth aspect of the present disclosure, for example, in the positive electrode material according to the third aspect, the coating material may contain Li, S, O, and F. Since a favorable coating layer is formed, the solid electrolyte can be suppressed from deteriorating, and the resistance of the battery can be more effectively reduced.

Regarding a sixth aspect of the present disclosure, for example, in the positive electrode material according to the second aspect, the coating material may contain a POₓF_{y} group. Since a more favorable interface between the active material and the solid electrolyte can be formed, the resistance of the battery can be more effectively reduced.

Regarding a seventh aspect of the present disclosure, for example, in the positive electrode material according to the sixth aspect, the coating material may contain Li, P, O, and F. According to such a configuration, since a more favorable interface between the active material and the solid electrolyte can be formed, the resistance of the battery can be more effectively reduced.

Regarding an eighth aspect of the present disclosure, for example, in the positive electrode material according to the first aspect, the coating material may contain Li, P, and F. According to such a configuration, since a more favorable interface between the active material and the solid electrolyte can be formed, the resistance of the battery can be more effectively reduced.

Regarding a ninth aspect of the present disclosure, for example, in the positive electrode material according to the first aspect, the coating material may contain at least one selected from the group consisting of LiSO₃F, LiN(SO₂F)₂, LiPO₂F₂, and LiPF₆. These materials being used as the coating material enables the resistance of the battery to be reliably reduced.

Regarding a tenth aspect of the present disclosure, for example, in the positive electrode material according to any one of the first aspect to the ninth aspect, the ratio of the mass of the coating material to a total mass of the positive electrode active material and the coating material may be greater than 0% by mass and may be less than or equal to 10.0% by mass. The amount of coating being adjusted to such a range enables the resistance of the battery to be more effectively reduced since transfer of lithium ions between the active material and the solid electrolyte is smoothly performed.

Regarding an eleventh aspect of the present disclosure, for example, in the positive electrode material according to any one of the first aspect to the tenth aspect, the ratio of the mass of the coating material to a total mass of the positive electrode active material and the coating material may be greater than 0% by mass and may be less than or equal to 5.0% by mass. The amount of coating being adjusted to such a range enables the resistance of the battery to be more effectively reduced since transfer of lithium ions between the active material and the solid electrolyte is smoothly performed.

Regarding a twelfth aspect of the present disclosure, for example, in the positive electrode material according to any one of the first aspect to the eleventh aspect, the ratio of the mass of the coating material to a total mass of the positive electrode active material and the coating material may be greater than 0% by mass and may be less than or equal to 3.0% by mass. The amount of coating being adjusted to such a range enables the resistance of the battery to be more effectively reduced since transfer of lithium ions between the active material and the solid electrolyte is smoothly performed.

Regarding a thirteenth aspect of the present disclosure, for example, in the positive electrode material according to any one of the first aspect to the twelfth aspect, a peak may be present in the range of 685 ± 7 eV in the XPS spectrum of the coating material measured using the Al Kα ray. Regarding the coating material having a peak in the above-described range, denaturing does not occur during a charge-discharge reaction, and the resistance can be continuously reduced.

Regarding a fourteenth aspect of the present disclosure, for example, in the positive electrode material according to any one of the first aspect to the thirteenth aspect, the layer thickness of the coating material may be greater than or equal to 1 nm and may be less than or equal to 100 nm. The layer thickness of the coating material being adjusted to such a range suppresses a positive electrode active material particle and a solid electrolyte particle from coming into direct contact with each other and enables a side reaction of the solid electrolyte to be suppressed from occurring. In addition, the internal resistance of the battery can be sufficiently reduced.

Regarding a fifteenth aspect of the present disclosure, for example, in the positive electrode material according to any one of the first aspect to the fourteenth aspect, the solid electrolyte may contain at least one selected from the group consisting of a sulfide solid electrolyte, a halide solid electrolyte, and an oxyhalide solid electrolyte. According to such a configuration, the ionic conductivity of the solid electrolyte can be improved.

Regarding a sixteenth aspect of the present disclosure, for example, in the positive electrode material according to any one of the first aspect to the fifteenth aspect, the positive electrode active material may contain a lithium-containing transition metal oxide. According to such a configuration, the energy density of the battery can be improved.

A battery according to a seventeenth aspect of the present disclosure includes
a positive electrode containing the positive electrode material according to any one of the first aspect to the sixteenth aspect,
a negative electrode, and
an electrolyte layer disposed between the positive electrode and the negative electrode.

According to the battery of the present disclosure, the above-described advantages are obtained with respect to the positive electrode.

Regarding an eighteenth aspect of the present disclosure, for example, in the battery according to the seventeenth aspect, the electrolyte layer may contain a sulfide solid electrolyte. According to such a configuration, a low-potential negative electrode material, such as graphite or lithium metal, can be used, and the energy density of the battery can be improved.

A method for producing a positive electrode material according to a nineteenth aspect of the present disclosure is
a method for producing a positive electrode material containing a positive electrode active material and a coating material for coating the positive electrode active material, the method includes
producing a solution containing the coating material and a first solvent,
producing a mixture by mixing the solution and the positive electrode active material, and
coating the positive electrode active material with the coating material by removing the first solvent from the mixture.

According to the method of the present disclosure, the positive electrode active material can be efficiently coated with the coating material. The method is simple since drying at high temperature is not indispensable.

Regarding a twentieth aspect of the present disclosure, for example, in the method for producing the positive electrode material according to the nineteenth aspect, a slurry-like positive electrode material may be produced by using a second solvent in which the coating material is insoluble and kneading a solid electrolyte and the positive electrode active material coated with the coating material. According to such a configuration, the positive electrode can be efficiently produced.

The embodiments according to the present disclosure will be described below with reference to the drawings.

### (First embodiment)

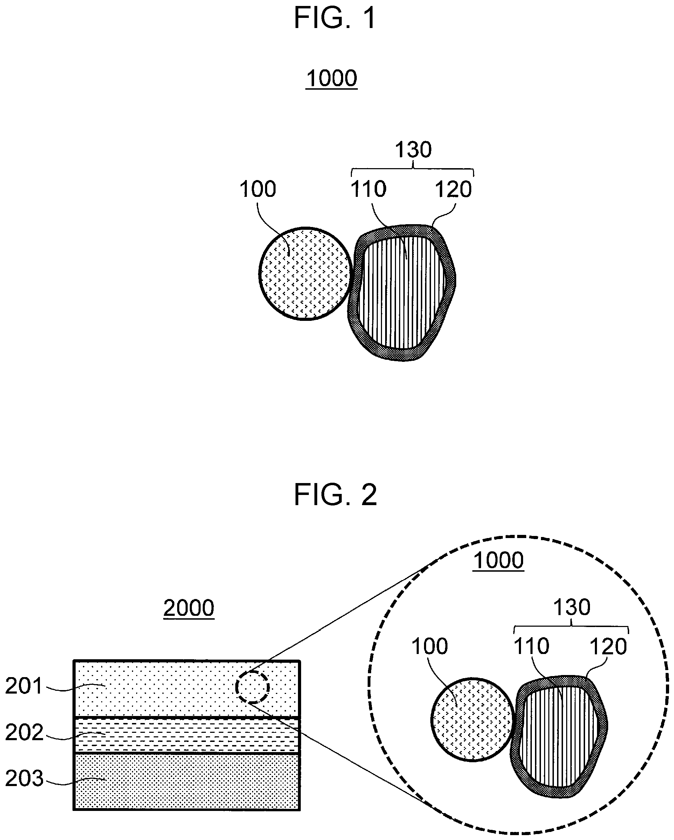

Fig. 1 is a schematic sectional view illustrating the configuration of a positive electrode material 1000 in a first embodiment.

The positive electrode material 1000 in the first embodiment contains a coated active material 130 and a solid electrolyte 100. The coated active material 130 and the solid electrolyte 100 are in contact with each other.

The coated active material 130 includes a positive electrode active material 110 and a coating layer 120. The coating layer 120 is disposed on the surface of the positive electrode active material 110. The coating layer 120 is a layer containing a coating material. The positive electrode active material 110 is coated with the coating material. In the coating layer 120, the coating material is in a solid state.

The coating material is denoted by Composition formula (1) below. Herein, each of a, b, and c is a positive real number, A is at least one selected from the group consisting of N, P, and S, and X contains at least F.

LiₐA_{b}X_{c} (1)

The coating material denoted by Formula (1) being contained in the coating layer 120 enables the resistance of a battery to be significantly reduced. Although the principle is not certain, it is conjectured that various causes, such as the voltage resistance of the coating material, the oxidation resistance of the solid electrolyte 100, the reactivity between the coating material and the positive electrode active material 110, the reactivity between the coating material and the solid electrolyte 100, and physical contact state between the positive electrode active material 110 and the solid electrolyte 100, are involved in combination. It is conjectured that the coating material plays a role in facilitating transfer of lithium ions between the positive electrode active material 110 and the solid electrolyte 100 on the surface of the positive electrode active material 110. The coating layer 120 may contain only the coating material except incidental impurities.

In Formula (1), X may contain O and F.

According to the above-described configuration, since a more favorable interface between the coated active material 130 and the solid electrolyte 100 can be formed, the resistance of the battery can be more effectively reduced. X may be composed of O and F except incidental impurities.

The coating material may contain a SOₓF_{y} group. The values of x and y satisfy x > 0 and y > 0. Even when x + y = 3 or 4 in a stoichiometric composition, x and y based on actual chemical analysis are nonstoiciometric.

According to the above-described configuration, since a more favorable coating layer 120 is formed, the solid electrolyte 100 can be suppressed from deteriorating, and the resistance of the battery can be more effectively reduced.

The coating material may contain Li, N, S, O, and F.

According to the above-described configuration, since a more favorable interface between the coated active material 130 and the solid electrolyte 100 can be formed, the resistance of the battery can be more effectively reduced. The coating material may be composed of Li, N, S, O, and F except incidental impurities.

The coating material may contain Li, S, O, and F.

According to the above-described configuration, since a more favorable coating layer 120 is formed, the solid electrolyte 100 can be suppressed from deteriorating, and the resistance of the battery can be more effectively reduced. The coating material may be composed of Li, S, O, and F except incidental impurities.

The coating material may contain a POₓF_{y} group. The values of x and y satisfy x > 0 and y > 0. Even when x + y = 3 or 4 in a stoichiometric composition, x and y based on actual chemical analysis are nonstoichiometric.

According to the above-described configuration, since a more favorable interface between the coated active material 130 and the solid electrolyte 100 can be formed, the resistance of the battery can be more effectively reduced.

The coating material may contain Li, P, O, and F.

According to the above-described configuration, since a more favorable interface between the coated active material 130 and the solid electrolyte 100 can be formed, the resistance of the battery can be more effectively reduced. The coating material may be composed of Li, P, O, and F except incidental impurities.

The coating material may contain Li, P, and F.

According to the above-described configuration, since a more favorable interface between the coated active material 130 and the solid electrolyte 100 can be formed, the resistance of the battery can be more effectively reduced. The coating material may be composed of Li, P, and F except incidental impurities.

The coating material may be a phosphoric-acid-base material or a sulfonic-acid-based material. The coating material may contain at least one selected from the group consisting of LiPF₆, LiPOF₄, LiPO₂F₂, Li₂PO₃F, LiSO₃F, LiSO₃CF₃, LiN(SO₂F)₂, LiN(SO₂CF₃)₂, LiNS₂O₄C₃F₈, LiSO₃C₄F₉, and LiS₃O₆C₄F₉.

It is desirable that the coating material contain at least one selected from the group consisting of LiSO₃F, LiN(SO₂F)₂, LiPO₂F₂, and LiPF₆.

These materials being used as the coating material enables the resistance of the battery to be reliably reduced.

The ratio of the mass of the coating material to the mass of the coated active material 130 may be greater than 0% by mass and may be less than or equal to 10.0% by mass. The ratio of the mass of the coating material to the mass of the coated active material 130 may be greater than 0% by mass and may be less than or equal to 5.0% by mass. The ratio of the mass of the coating material to the mass of the coated active material 130 may be greater than 0% by mass and may be less than or equal to 3.0% by mass.

The amount of cover being adjusted to such a range enables the resistance of the battery to be more effectively reduced since transfer of lithium ions between the coated active material 130 and the solid electrolyte 100 is smoothly performed.

The ratio of the mass of the coating material to the mass of the coated active material 130 can be determined using, for example, the following method. An aqueous solution is prepared by dissolving the coated active material 130 in an acid or the like. Thereafter, an element contained in the aqueous solution is quantified based on the inductively coupled plasma (ICP) emission spectrochemical analysis. In this manner, the ratio of the mass of the coating material to the mass of the coated active material 130 can be determined. In such an instance, the quantitative value of an element contained in only one of the positive electrode active material 110 and the coating material may be noted. For example, when LiNiO₂ is coated with LiSO₃F, the mass ratio of the coating material can be determined from the quantitative values of Ni and S on the assumption that each of LiNiO₂ and LiSO₃F is present with a stoichiometric composition. The coating material may be dissolved in pure water, and, subsequently, the element may be quantified by detecting a dissolved ion by using an ion chromatography.

The coating material may have a peak in the range of 685 ± 7 eV in the XPS spectrum measured using an Al Kα ray. A peak attributed to the F1s orbital is detected in the range of 685 ± 7 eV. In particular, a peak having the center at 685 eV indicates that a Li-F bond is present. The bond between Li and F is strong compared with the bond between Li and another anion and, therefore, is stable. Consequently, regarding the coating material having a peak in the above-described range, denaturing is hard to occur during a charge-discharge reaction, and the resistance can be continuously reduced.

The thickness of the coating layer 120 may be greater than or equal to 1 nm and may be less than or equal to 100 nm. The thickness of the coating layer 120 being greater than or equal to 1 nm suppresses a particle of the positive electrode active material 110 and a particle of the solid electrolyte 100 from coming into direct contact with each other and enables a side reaction of the solid electrolyte 100 to be suppressed from occurring. Consequently, the charge-discharge efficiency can be improved. The thickness of the coating layer 120 being less than or equal to 100 nm prevents the thickness of the coating layer 120 from becoming excessively large. Consequently, the internal resistance of the battery can be sufficiently reduced. As a result, the energy density of the battery can be increased.

The thickness of the coating layer 120 may be greater than or equal to 1 nm and may be less than or equal to 40 nm. The thickness of the coating layer 120 being less than or equal to 40 nm enables the internal resistance of the battery to be reduced. As a result, the energy density of the battery can be increased.

There is no particular limitation regarding the method for measuring the thickness of the coating layer 120. For example, in the XPS measurement, the thickness can be estimated by observing a specific peak attributed to the coating material while the surface of the coated active material 130 is removed through ion beam etching. Alternatively, the thickness of the coating layer 120 may be measured through direct observation by using a transmission electron microscope.

The coating layer 120 may cover the entire surface of the particle of the positive electrode active material 110. A particle of the positive electrode active material 110 and a particle of the solid electrolyte 100 are suppressed from coming into direct contact with each other, and a side reaction of the solid electrolyte 100 can be suppressed from occurring. Consequently, the charge-discharge efficiency can be improved.

Alternatively, the coating layer 120 may cover only a portion of the surface of the particle of the positive electrode active material 110. A plurality of particles of the positive electrode active material 110 being in direct contact with each other through portions not provided with the coating layer 120 improves the electron conductivity between particles of the positive electrode active material 110. Consequently, the battery can operate with a high output.

There is no particular limitation regarding the shape of the solid electrolyte 100 in the first embodiment. For example, the shape may be a needle-like shape, a spherical shape, an ellipsoidal spherical shape, or the like. For example, the shape of the solid electrolyte 100 may be granular.

For example, when the shape of the solid electrolyte 100 in the first embodiment is granular (for example, spherical), the median diameter may be less than or equal to 100 µm. The median diameter of the solid electrolyte 100 being less than or equal to 100 µm enables the coated active material 130 and the solid electrolyte 100 to form a favorable dispersion state in the positive electrode material 1000. Consequently, the charge-discharge characteristics of the battery are improved. In the first embodiment, the median diameter of the solid electrolyte 100 may be less than or equal to 10 µm.

According to the above-described configuration, the coated active material 130 and the solid electrolyte 100 can form a favorable dispersion state in the positive electrode material 1000.

In the first embodiment, the median diameter of the solid electrolyte 100 may be smaller than the median diameter of the coated active material 130.

According to the above-described configuration, the solid electrolyte 100 and the coated active material 130 can form a more favorable dispersion state in the positive electrode material 1000.

The median diameter of the coated active material 130 may be greater than or equal to 0.1 µm and may be less than or equal to 100 µm.

The median diameter of the coated active material 130 being greater than or equal to 0.1 µm enables the coated active material 130 and the solid electrolyte 100 to form a favorable dispersion state in the positive electrode material 1000. As a result, the charge-discharge characteristics of the battery are improved.

The median diameter of the coated active material 130 being less than or equal to 100 µm enables the diffusion rate of lithium in the coated active material 130 to be sufficiently ensured. Consequently, the battery can operate with a high output.

The median diameter of the coated active material 130 may be larger than the median diameter of the solid electrolyte 100. Consequently, the coated active material 130 and the solid electrolyte 100 can form a favorable dispersion state.

In the positive electrode material 1000 in the first embodiment, as illustrated in Fig. 1, a particle of the solid electrolyte 100 and a particle of the coated active material 130 may be in contact with each other. A space between particles of the coated active material 130 may be filled with the solid electrolyte 100. In such an instance, the coating layer 120 and the solid electrolyte 100 are in contact with each other.

The positive electrode material 1000 in the first embodiment may include a plurality of particles of the solid electrolyte 100 and a plurality of particles of the coated active material 130.

In the positive electrode material 1000, the content of the solid electrolyte 100 and the content of the coated active material 130 may be equal to each other or may differ from each other.

In the present specification, the "median diameter" denotes a particle diameter at a cumulative volume of 50% in the particle size distribution on a volume basis. The particle size distribution on a volume basis is measured using, for example, a laser diffraction type measuring apparatus or an image analyzer.

The solid electrolyte 100 may contain at least one selected from the group consisting of a sulfide solid electrolyte, a halide solid electrolyte, and an oxyhalide solid electrolyte.

According to the above-described configuration, the ionic conductivity of the solid electrolyte 100 can be improved. Consequently, the resistance of the battery can be reduced.

Examples of the halide solid electrolyte include Li₃YX₆, Li₂MgX₄, Li₂FeX₄, Li(Al,Ga,In)X₄, and Li₃(Al,Ga,In)X₆.

Examples of the oxyhalide solid electrolyte include Liₐ(Ta,Nb)_{b}O_{c}X_{d}. Each of a, b, c, and d is a value greater than 0. X contains at least one selected from the group consisting of F, Cl, Br, and I.

Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂. LiX, Li₂O, MO_{q}, LiₚMO_{q} and the like may be added to these. Herein, the element X in "LiX" is at least one element selected from the group consisting of F, Cl, Br, and I. The element M in "MO_{q}" and "LiₚMO_{q}" is at least one element selected from the group consisting of P, Si, Ge, B, Al, Ga, In, Fe, and Zn. Each of p and q in "MO_{q}" and "LiₚMO_{q}" is a natural number.

In the present disclosure, when an element is expressed such as "(Al,Ga,IN)", this expression denotes at least one element selected from the element group consisting of elements in parentheses. That is, "(Al,Ga,IN)" is synonymous with "at least one selected from the group consisting of Al, Ga, and In". The same applies to other elements.

Various solid electrolytes may be produced using, for example, the following method.

Raw material powders are prepared so as to ensure an intended composition ratio. For example, when Li₃YBr₃Cl₃ is produced, LiCl and YBr₃ are prepared at a molar ratio of 3:1. The composition of the solid electrolyte can be adjusted by adjusting the types of raw material powders, the mixing ratio of the raw material powders, and a synthesis process.

After the raw material powders are sufficiently mixed, the raw material powders are mixed with each other, pulverized, and reacted using a mechanochemical milling method. Alternatively, after the raw material powders are sufficiently mixed, the resulting mixture may be heat-treated in an inert atmosphere. Consequently, a predetermined solid electrolyte is obtained.

The positive electrode active material 110 may contain a lithium-containing transition metal oxide.

According to the above-described configuration, the energy density of the battery can be increased.

The positive electrode active material 110 contains a material having characteristics of occluding and releasing a metal ion (for example, a lithium ion). Regarding the positive electrode active material 110, for example, lithium-containing transition metal oxides, transition metal fluorides, polyanion materials, fluorinated polyanion materials, transition metal sulfides, transition metal oxysulfides, and transition metal oxynitrides may be used. In particular, using the lithium-containing transition metal oxide as the positive electrode active material 110 enables the production cost to be reduced and enables an average discharge voltage to be increased.

The positive electrode active material 110 may contain at least one selected from the group consisting of Li(NiCoAl)O₂, Li(NiCoMn)O₂, and LiCoO₂. It is desirable that the positive electrode active material 110 contain Li(NiCoMn)O₂. The positive electrode active material 110 may contain a single active material or may contain a plurality of active materials having compositions which differ from each other.

According to the above-described configuration, the energy density and the charge-discharge efficiency of the battery can be further increased.

The positive electrode active material 110 has, for example, a granular shape. There is no particular limitation regarding the shape of the particle of the positive electrode active material 110. The shape of the particle of the positive electrode active material 110 may be a spherical shape, an ellipsoidal spherical shape, a scaly shape, or a fibrous shape.

Next, a method for producing the positive electrode material 1000 will be described.

To begin with, a solution containing the coating material and a first solvent is produced. The first solvent is a solvent capable of dissolving the coating material denoted by Formula (1). Examples of the first solvent include dimethyl carbonate, ethylmethyl carbonate, diethyl carbonate, ethanol, methanol, hexanol, N-methylpyrrolidone, acetophenone, tetrahydrofurfuryl alcohol, methyl benzoate, methyl salicylate, isophorone, ethyl cyanoacetate, diethyl malonate, 1,4-dichlorobutane, ethyl acetate, benzaldehyde, chloroacetone, pyridine, butyronitrile, and acrylonitrile. One type selected from these solvents may be used alone as the first solvent, or a solvent mixture of at least two types may be used as the first solvent.

Subsequently, a mixture is produced by mixing the solvent and the positive electrode active material 110. The positive electrode active material 110 is coated with the coating material by removing the first solvent from the resulting mixture. The first solvent may be removed from the mixture by leaving the mixture to stand in air at room temperature, or the first solvent may be vaporized from the mixture by heating the mixture. In this manner, a powder of the coated active material 130 is obtained. According to such a method, the positive electrode active material 110 can be efficiently coated with the coating material. In consideration of removing the first solvent by heating, it is recommended that the first solvent having a boiling temperature lower than the decomposition temperature of the coating material is used.

Further, a second solvent in which the coating material is insoluble is used, and a slurry-like positive electrode material 1000 is produced by kneading the solid electrolyte 100 and the positive electrode active material 110 coated with the coating material. A positive electrode collector is coated with the slurry-like positive electrode material 1000 so as to form a coating film, and the coating film is dried so as to obtain a positive electrode of a battery. The coating film may be dried by being heated at a temperature higher than room temperature, or the coating film may be dried by being left to stand in air at room temperature. In the former method, it is sufficient that the drying temperature is lower than 100°C. According to the method of the present embodiment, the positive electrode can be efficiently produced by a wet method such as a coating method. The method of the present embodiment is simple since drying at high temperature is not indispensable.

The second solvent has a δp value lower than the δp value of the first solvent. The coating material and the solid electrolyte are insoluble in the second solvent. Using the second solvent enables the positive electrode including the coated active material 130 and the solid electrolyte 100 to be produced while the coating layer 120 is maintained. The "δp value" is a polarization term of the Hansen solubility parameter.

### (Second embodiment)

The second embodiment will be described below. The same explanations as that for the first embodiment are appropriately omitted.

Fig. 2 is a schematic sectional view illustrating the configuration of a battery 2000 in the second embodiment.

The battery 2000 in the second embodiment includes a positive electrode 201, an electrolyte layer 202, and a negative electrode 203.

The positive electrode 201 contains the positive electrode material 1000 in the first embodiment. The positive electrode 201 has the advantages described in the first embodiment.

The electrolyte layer 202 is disposed between the positive electrode 201 and the negative electrode 203.

According to the above-described configuration, the charge-discharge efficiency of the battery 2000 can be improved.

Regarding the volume ratio "v1:100 - v1" of the positive electrode active material 110 to the solid electrolyte 100 (first solid electrolyte) contained in the positive electrode 201, 30 ≤ v1 ≤ 95 may be satisfied. When 30 ≤ v1 is satisfied, the energy density of the battery 2000 is sufficiently ensured. In addition, when v1 ≤ 95 is satisfied, an operation with a high output can be performed.

The thickness of the positive electrode 201 may be greater than or equal to 10 µm and may be less than or equal to 500 µm. The thickness of the positive electrode 201 being greater than or equal to 10 µm ensures the energy density of the battery 2000. The thickness of the positive electrode 201 being less than or equal to 500 µm enables an operation with a high output to be performed.

The electrolyte layer 202 is a layer containing an electrolyte. The electrolyte is, for example, a solid electrolyte. That is, the electrolyte layer 202 may be a solid electrolyte layer. Hereafter the solid electrolyte contained in the electrolyte layer 202 is also referred to as a "second solid electrolyte".

Regarding the second solid electrolyte, the materials described as examples in the first embodiment may be used. That is, the electrolyte layer 202 may contain a solid electrolyte having the same composition as the composition of the solid electrolyte 100 contained in the positive electrode material 1000.

According to the above-described configuration, the charge-discharge efficiency of the battery 2000 can be further improved.

Alternatively, the electrolyte layer 202 may contain a halide solid electrolyte having a composition different from the composition of the solid electrolyte 100 contained in the positive electrode material 1000.

According to the above-described configuration, the output density and the charge-discharge efficiency of the battery 2000 can be improved.

The halide solid electrolyte contained in the electrolyte layer 202 may contain Y as a metal element.

According to the above-described configuration, the output density and the charge-discharge efficiency of the battery 2000 can be further improved.

The electrolyte layer 202 may contain a sulfide solid electrolyte. Examples of the sulfide solid electrolyte include solid electrolytes described in the first embodiment.

According to the above-described configuration, the sulfide solid electrolyte having excellent reduction stability being contained enables a low-potential negative electrode material such as graphite or lithium metal to be used and enables the energy density of the battery 2000 to be increased.

The electrolyte layer 202 may contain at least one selected from the group consisting of an oxide solid electrolyte, a polymer solid electrolyte, and a complex hydride solid electrolyte.

Regarding the oxide solid electrolyte, for example, NASICON-type solid electrolytes represented by LiTi₂(PO₄)₃ and an element-substitution product thereof, (LaLi)TiO₃-based perovskite-type solid electrolytes, LISICON type solid electrolytes represented by Li₁₄ZnGe₄O₁₆, Li₄SiO₄, or LiGeO₄ and an element-substitution product thereof, garnet type solid electrolytes represented by Li₇La₃Zr₂O₁₂ and an element-substitution product thereof, Li₃N and an H-substitution product thereof, Li₃PO₄ and an N-substitution product thereof, and glass or glass ceramic in which a material such as Li₂SO₄ or Li₂CO₃ is added to a base material containing a Li-B-O compound such as LiBO₂ or Li₃BO₃ are used.

Regarding the polymer solid electrolyte, for example, a compound of a polymer compound and a lithium salt may be used. The polymer compound may have an ethylene oxide structure. The polymer compound having the ethylene oxide structure can contain much lithium salt. Consequently, the ion conductivity can be further increased. Regarding the lithium salt, LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), LiC(SO₂CF₃)₃, and the like may be used. A lithium salt selected from these may be used alone as the lithium salt. Alternatively, a mixture of at least two types of lithium salts selected from these may be used.

Regarding the complex hydride solid electrolyte, for example, LiBH₄-LiI and LiBH₄-P₂S₅ may be used.

The electrolyte layer 202 may contain the second solid electrolyte as a primary component. That is, the electrolyte layer 202 may contain greater than or equal to 50% on a mass ratio relative to a total mass of the electrolyte layer 202 basis (that is, greater than or equal to 50% by mass) of the second solid electrolyte.

According to the above-described configuration, the charge-discharge characteristics of the battery 2000 can be further improved.

The electrolyte layer 202 may contain greater than or equal to 70% on a mass ratio relative to a total mass of the electrolyte layer 202 basis (that is, greater than or equal to 70% by mass) of the second solid electrolyte.

According to the above-described configuration, the charge-discharge characteristics of the battery 2000 can be further improved.

The electrolyte layer 202 may contain the second solid electrolyte as a primary component and may further contain incidental impurities or starting raw materials used for synthesizing the second solid electrolyte, by-products, decomposition products, and the like.

The electrolyte layer 202 may contain 100% on a mass ratio relative to a total mass of the electrolyte layer 202 basis (that is, 100% by mass) of the second solid electrolyte except incidental impurities.

According to the above-described configuration, the charge-discharge characteristics of the battery 2000 can be further improved.

As described above, the electrolyte layer 202 may be composed of just the second solid electrolyte.

The electrolyte layer 202 may contain only one type of solid electrolyte selected from the above-described group of solid electrolytes or may contain at least two types of solid electrolytes selected from the above-described group of solid electrolytes. A plurality of solid electrolytes have compositions which differ from each other. For example, the electrolyte layer 202 may contain a halide solid electrolyte and a sulfide solid electrolyte.

The thickness of the electrolyte layer 202 may be greater than or equal to 1 µm and may be less than or equal to 300 µm. The thickness of the electrolyte layer 202 being greater than or equal to 1 µm enables the positive electrode 201 to be more reliably separated from the negative electrode 203. The thickness of the electrolyte layer 202 being less than or equal to 300 µm enables the operation with a high output to be performed.

The negative electrode 203 contains a material having metal-ion (for example, lithium ion) occlusion and release characteristics. The negative electrode 203 contains, for example, a negative electrode active material.

Regarding the negative electrode active material, metal materials, carbon materials, oxides, nitrides, tin compounds, silicon compounds, and the like may be used. The metal material may be a simple metal. Alternatively, the metal material may be an alloy. Examples of the metal material include lithium metal and lithium alloys. Examples of the carbon material include natural graphite, coke, graphitizing carbon, carbon fiber, spherical carbon, artificial carbon, and amorphous carbon. From the viewpoint of the capacity density, silicon (Si), tin (Sn), silicon compounds, and tin compounds may be used.

The negative electrode 203 may contain a solid electrolyte (third solid electrolyte). According to the above-described configuration, the lithium ion conductivity inside the negative electrode 203 can be increased and the operation with a high output can be performed. The above-described materials may be used as the solid electrolyte.

The median diameter of the negative electrode active material particles may be greater than or equal to 0.1 µm and may be less than or equal to 100 µm. The median diameter of the negative electrode active material particles being greater than or equal to 0.1 µm enables the negative electrode active material particles and the solid electrolyte material to form a favorable dispersion state in the negative electrode 203. Consequently, the charge-discharge characteristics of the battery 2000 are improved. The median diameter of the negative electrode active material particles being less than or equal to 100 µm accelerates lithium diffusion in the negative electrode active material particles. Consequently, the battery 2000 can operate with a high output.

The median diameter of the negative electrode active material particles may be greater than the median diameter of the solid electrolyte particles contained in the negative electrode 203. Consequently, the negative electrode active material and the solid electrolyte material can form a favorable dispersion state.

When the volume ratio of the negative electrode active material to the solid electrolyte in the negative electrode 203 is denoted as "v2:100 - v2", the volume ratio of the negative electrode active material v2 may satisfy 30 ≤ v2 ≤ 95. When 30 ≤ v2 is satisfied, a sufficient energy density of the battery 2000 can be ensured. When v2 ≤ 95 is satisfied, the operation with a high output can be performed.

The thickness of the negative electrode 203 may be greater than or equal to 10 µm and may be less than or equal to 500 µm. The thickness of the negative electrode 203 being greater than or equal to 10 µm ensures a sufficient energy density of the battery 2000. The thickness of the negative electrode 203 being less than or equal to 500 µm enables the operation with a high output can be performed.

To improve the adhesiveness between particles, a binder may be contained in at least one selected from the group consisting of the positive electrode 201, the electrolyte layer 202, and the negative electrode 203. The binder is used for the purpose of improving the bondability of the materials constituting the electrode. Examples of the binder include polyvinylidene fluorides, polytetrafluoroethylenes, polyethylenes, polypropylenes, aramid resins, polyamides, polyimides, polyamide imides, polyacrylonitriles, polyacrylic acids, polyacrylic acid methyl esters, polyacrylic acid ethyl esters, polyacrylic acid hexyl esters, polymethacrylic acids, polymethacrylic acid methyl esters, polymethacrylic acid ethyl esters, polymethacrylic acid hexyl esters, polyvinyl acetates, polyvinylpyrrolidones, polyethers, polyether sulfones, hexafluoropolypropylenes, styrene-butadiene rubber, and carboxymethyl cellulose. Regarding the binder, copolymers of at least two materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene may be used. In addition, mixtures of at least two selected from these may be used as the binder.

To increase the electron conductivity, at least one of the positive electrode 201 or the negative electrode 203 may contain a conductive auxiliary agent. Regarding the conductive auxiliary agent, for example, graphite such as natural graphite or artificial graphite, carbon black such as acetylene black or Ketjenblack, conductive fibers such as carbon fiber or metal fiber, metal powders such as carbon fluoride or aluminum, conductive whiskers such as zinc oxide or potassium titanate, conductive metal oxides such as titanium oxide, and conductive polymer compounds such as polyanilines, polypyrroles, or polythiophenes may be used. The carbon conductive auxiliary agent being used enables the cost to be reduced.

The battery 2000 in the second embodiment may be configured to be batteries of various types, such as a coin type, a cylindrical type, a square type, a sheet type, a button type, a flat type, and a stacked type.

### EXAMPLES

The present disclosure will be described below in detail with reference to the examples and the comparative examples.

### «Examples 1 to 4»

### [Production of coated active material]

In an argon glove box having a dew point of lower than or equal to -50°C, 0.25 g of LiSO₃F powder was dissolved in 19.75 g of dimethyl carbonate (DMC) so as to produce 1.25%-by-mass coating solution. The δp of dimethyl carbonate was 8.6.

Subsequently, 2 g of Li(NiCoMn)O₂ (hereafter referred to as NCM) serving as a positive electrode active material of Examples 1 to 4 was prepared in a polyolefin container. Agitation was performed while 0.5 g, 1.0 g, 2.0 g, or 4.0 g of coating solution was gradually dropped onto the positive electrode active material. Thereafter, vacuum drying was performed at 100°C. In this manner, granular coated active materials of Examples 1 to 4 were obtained.

### [Estimation of thickness of coating layer]

An F1s spectrum of the coated active material of Example 3 was obtained using an XPS method.

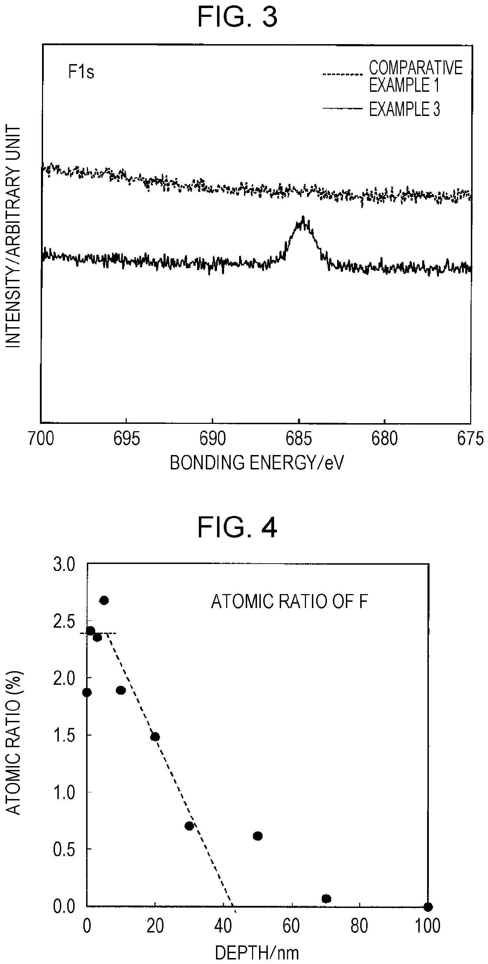

Fig. 3 is a graph illustrating F1s spectra based on the X-ray photoelectron spectroscopy (XPS) of a coated active material and NCM of Example 3. The XPS measurement was performed using an Al Kα ray. The XPS spectrum of Example 3 had a peak having the center at 685 eV. This peak was attributed to a bond of Li-F. Since no peak was observed with respect to NCM that did not include a coating layer, it is estimated that the resulting peak is a peak derived from the coating material.

Subsequently, to estimate the thickness of the coating layer, the coated active material was irradiated with an argon ion beam, and an F1s spectrum was observed while the surface was etched. The atomic ratio of F was determined from the resulting spectrum. The result is illustrated in Fig. 4.

Fig. 4 is a graph illustrating the atomic ratio of F determined from the F1s spectrum based on XPS performed while the coated active material of Example 3 was etched using an argon ion beam. The horizontal axis represents the depth of etching. The vertical axis represents the atomic ratio of F. It is understood from Fig. 4 that the atomic ratio of F decreased with increasing depth of etching. The plots indicating the atomic ratio of F were connected by a straight line, and the straight line was extrapolated to the horizontal axis. The straight line intersected the horizontal axis at a position of about 40 nm. It is conjectured that the atomic ratio of F was not 0 when the etching depth was 50 nm due to variations in the thickness of the coating layer. That is, when the positive electrode active material was coated with LiSO₃F where a mass ratio was 1.3% by mass, the thickness of the coating layer was about 50 nm at maximum. In this regard, in a region in which etching was shallow, the atomic ratio of F did not decrease regardless of depth. This indicates that the coating layer remained with respect to etching of about 1 nm to 5 nm. That is, the coated active material had about 5 nm of coating layer at minimum.

In Example 3, the ratio of the mass of the coating material to the mass of the coated active material was 1.3% by mass. When the amount of coating was 1.3% by mass, the coated active material included a coating layer having a thickness of 5 nm to 50 nm. On the assumption that the coverage is not changed even when the amount of coating is changed, it is conjectured that the thickness of the coating layer in the coated active material of Example 1 was 1 nm to 16 nm. It is conjectured that the thickness of the coating layer in the coated active material of Example 2 was 2 nm to 25 nm. It is conjectured that the thickness of the coating layer in the coated active material of Example 4 was 10 nm to 100 nm.

### [Production of halide solid electrolyte]

In an argon atmosphere having a dew point of lower than or equal to -60°C, LiCl, YCl₃, and YBr₃ at a molar ratio of LiCl:LYCl₃:YBr₃ = 3.000:0.333:0.666 were prepared as raw material powders. These were pulverized and mixed in a mortar. The resulting mixture of the raw material powders was heat-treated using an electric furnace in an argon atmosphere at 500°C for 3 hours. The resulting material was pulverized using a pestle and a mortar. In this manner, a powder of the halide solid electrolyte was obtained. Hereafter the halide solid electrolyte is referred to as "LYBC".

### [Production of battery]

In an argon atmosphere having a dew point of lower than or equal to -60°C, the coated active material, LYBC, and vapor grown carbon fiber (VGCF) serving as a conductive auxiliary agent at a mass ratio of 80:18:2 were prepared. These were mixed in an agate mortar so as to produce a positive electrode material.

In an insulating outer cylinder, 80 mg of sulfide solid electrolyte (Li₆PS₅Cl), 20 mg of LYBC, and 18.2 mg of positive electrode material were stacked in this order. These were pressure-formed at a pressure of 720 MPa so as to obtain a multilayer body of a positive electrode active material layer and a solid electrolyte layer.

Subsequently, Li foil was stacked on the solid electrolyte layer. These were pressure-formed at a pressure of 80 MPa so as to produce a multilayer body of a positive electrode active material layer, a solid electrolyte layer, and a negative electrode active material layer.

Thereafter, a stainless steel collectors were disposed on and under the multilayer body, and a collector lead was attached to the collector. Finally, the interior of the insulating outer cylinder was cut off from the outside atmosphere by the insulating outer cylinder being sealed using an insulating ferrule so as to produce the battery of Example 1. Batteries of Examples 2 to 4 were produced using the same method.

### [Charge-discharge test]

The battery of Example 1 was placed in a constant temperature bath at 25°C. The battery was subjected to constant-current charge at a current value of 0.140 mA, and charge was stopped at a voltage of 4.3 V. Subsequently, the battery was discharged at a current value of 0.140 mA, and discharge was stopped at a voltage of 2.5 V. The batteries of Examples 2 to 4 were subjected to a charge-discharge test by using the same method.

### [Measurement of resistance]

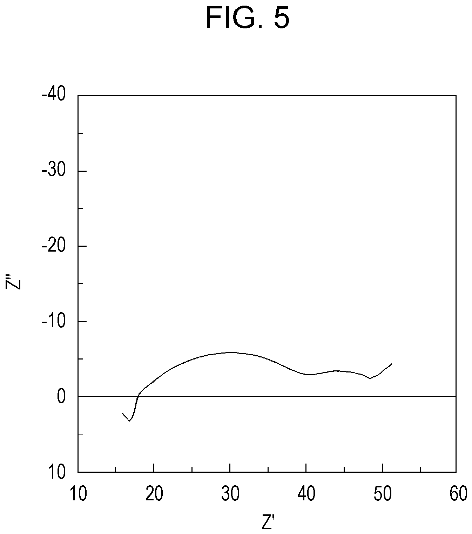

The battery of Example 1 was placed in a constant temperature bath at 25°C. The battery was connected to a potentiostat incorporated with a frequency response analyzer. The battery was subjected to constant-current charge at a current value of 0.140 mA, and charge was stopped at a voltage of 3.7 V. Thereafter, the frequency dependence of a resistance component was evaluated using an alternating current impedance method. In such an instance, a resistance component that appeared in the vicinity of 10⁵ Hz to 10² Hz was separated through curve fitting and was assumed to be a resistance component derived from the interface between the coated active material and the solid electrolyte. The result is illustrated in Fig. 5.

Fig. 5 is a Nyquist diagram of the battery of Example 1 at 3.7 V. According to this measurement, the resistance of Example 1 was estimated to be 22 ohm.

### «Examples 5 to 7»

### [Production of coated active material]

In an argon glove box, 0.2 g of LiN(SO₂F)₂ powder was dissolved in 19.80 g of dimethyl carbonate so as to produce 1.0%-by-mass coating solution.

Subsequently, 2 g of NCM serving as the positive electrode active material of Examples 5 to 7 was prepared in the polyolefin container. Agitation was performed while 1.3 g, 2.5 g, or 5.0 g of coating solution was gradually dropped onto the positive electrode active material. Thereafter, vacuum drying was performed at 100°C. In this manner, granular coated active materials of Examples 5 to 7 were obtained. Batteries were produced using the coated active materials of Examples 5 to 7 and using the same method as in Example 1, and a charge-discharge test and resistance measurement were performed.

### «Example 8»

### [Production of coated active material]

In an argon glove box, 0.1 g of LiPO₂F₂ powder was dissolved in 19.90 g of dimethyl carbonate so as to produce 0.5%-by-mass coating solution.

Subsequently, 2 g of NCM was prepared in the polyolefin container. Agitation was performed while 5 g of coating solution was gradually dropped onto the positive electrode active material. Thereafter, vacuum drying was performed at 100°C. In this manner, a coated active material of Example 8 was obtained. A battery was produced using the coated active materials of Example 8 and using the same method as in Example 1, and a charge-discharge test and resistance measurement were performed.

### «Example 9»

### [Production of coated active material]

In an argon glove box, 0.2 g of LiPF₆ powder was dissolved in 19.80 g of dimethyl carbonate so as to produce 1.0%-by-mass coating solution.

Subsequently, 2 g of NCM was prepared in the polyolefin container. Agitation was performed while 1.3 g of coating solution was gradually dropped onto the positive electrode active material. Thereafter, vacuum drying was performed at 100°C. In this manner, a coated active material of Example 9 was obtained. A battery was produced using the coated active material of Example 9 and using the same method as in Example 1, and a charge-discharge test and resistance measurement were performed.

### <<Comparative example 1»

A battery was produced using the same method as in Example 1 except that NCM not including a coating layer was used, and a charge-discharge test and resistance measurement were performed.

**[Table 1]**

| | Solid electrolyte | Coating material | Amount of coating (mass%) | Coating thickness (nm) | Resistance (ohm) |
|---|---|---|---|---|---|
| Example 1 | LYBC | LiSO₃F | 0.3 | - | 22 |
| Example 2 | LYBC | LiSO₃F | 0.6 | - | 23 |
| Example 3 | LYBC | LiSO₃F | 1.3 | 5-50 | 38 |
| Example 4 | LYBC | LiSO₃F | 2.5 | - | 30 |
| Example 5 | LYBC | LiN(SO₂F)₂ | 0.6 | 5 | 25 |
| Example 6 | LYBC | LiN(SO₂F)₂ | 1.3 | 11 | 27 |
| Example 7 | LYBC | LiN(SO₂F)₂ | 2.5 | 22 | 29 |
| Example 8 | LYBC | LiPO₂F₂ | 1.3 | - | 36 |
| Example 9 | LYBC | LiPF₆ | 0.6 | 8 | 59 |
| Comparative example 1 | LYBC | none | - | - | 73 |

### [Consideration 1]

Table 1 presents the solid electrolyte, the coating material, the amount of coating, the coating thickness, and the resistance at a voltage of 3.7 V of Examples 1 to 9 and Comparative example 1.

The battery of each of Examples 1 to 9 exhibited resistance lower than the resistance of the battery of Comparative example 1. This result indicates that the positive electrode active material coated with a lithium salt such as LiSO₃F being used for the solid battery enables the resistance of the solid battery to be significantly reduced regardless of just a lithium salt having poor lithium ion conductivity. In particular, when the positive electrode active material was coated with the coating material containing O and F, a more significant resistance reduction effect was obtained. The reason for this is conjectured to be that the coating material containing O improves the affinity between the coating material and the positive electrode active material so as to form a favorable interface between the coating layer and the positive electrode active material.

### «Example 10»

### [Production of oxyhalide solid electrolyte]

In a dry atmosphere having a dew point of lower than or equal to -30°C, LiOH and TaCl₅ serving as raw material powders were weighed at a molar ratio of LiOH:TaCls = 1:1. These raw material powders were pulverized and mixed in a mortar so as to obtain a powder mixture. The resulting powder mixture was subjected to milling treatment by using a planetary ball mill for 24 hours at 600 rpm. Subsequently, the resulting powder mixture was heat-treated at 200°C for 6 hours. In this manner, a powder of the solid electrolyte including a crystal phase composed of Li, Ta, O, and Cl (hereafter referred to as "LTOC") was obtained.

In an argon atmosphere having a dew point of lower than or equal to -60°C, the coated active material of Example 1, LTOC, and vapor grown carbon fiber (VGCF) serving as a conductive auxiliary agent at a mass ratio of 77:21:2 were prepared. These were mixed in an agate mortar so as to produce a positive electrode material of Example 10. A battery was produced using the same method as in Example 1 except that the positive electrode material of Example 10 was used, and a charge-discharge test and resistance measurement were performed.

### «Example 11»

A battery was produced using the same method as in Example 10 except that the coated active material of Example 5 was used, and a charge-discharge test and resistance measurement were performed.

### <<Comparative example 2»

A battery was produced using the same method as in Example 10 except that NCM not including a coating layer was used, and a charge-discharge test and resistance measurement were performed.

**[Table 2]**

| | Solid electrolyte | Coating material | Amount of coating (mass%) | Resistance (ohm) |
|---|---|---|---|---|
| Example 10 | LTOC | LiSO₃F | 0.3 | 4 |
| Example 11 | LTOC | LiN(SO₂F)₂ | 0.6 | 3 |
| Comparative example 2 | LTOC | none | - | 27 |

### [Consideration 2]

Table 2 presents the solid electrolyte, the coating material, the amount of coating, and the resistance at a voltage of 3.7 V of Examples 10, Example 11 and Comparative example 2.

According to the results presented in Table 2, when the oxyhalide solid electrolyte was used as the solid electrolyte, the effect of reducing the resistance was also obtained.

### «Example 12»

### [Production of coated active material]

A coated active material was produced by coating the positive electrode active material with LiSO₃F by using the same method as in Example 3.

### [Production of battery]

The coated active material of Example 12, LPS serving as the solid electrolyte, and a styrene-ethylene-butadiene copolymer serving as a binder were prepared so that a mass ratio was set to be 83:15:2. These were mixed with 1,2,3,4-tetrahydronaphthalene (THN) serving as a solvent so as to produce a positive electrode slurry. The δp of THN used as the solvent was 2. The positive electrode slurry was applied to a collector composed of aluminum foil by using an applicator so as to form a coating film. Thereafter, the coating film was dried at 100°C so as to obtain a positive electrode plate.

### [Production of battery]

The positive electrode plate was stamped using a stamping die into a circle having a diameter of 9.2 mm.

In an insulating outer cylinder, 80 mg of sulfide solid electrolyte (Li₆PS₅Cl), 20 mg of LYBC, and the circular positive electrode plate were stacked in this order. These were pressure-formed at a pressure of 720 MPa so as to obtain a multilayer body of a positive electrode and a solid electrolyte layer.

Subsequently, Li foil and In foil were stacked on the solid electrolyte layer. These were pressure-formed at a pressure of 80 MPa so as to produce a multilayer body of a positive electrode, a solid electrolyte layer, and a negative electrode.

Thereafter, a stainless steel collectors are disposed on and under the multilayer body, and a collector lead was attached to the collector. Finally, the interior of the insulating outer cylinder was cut off from the outside atmosphere by the insulating outer cylinder being sealed using an insulating ferrule so as to produce the battery of Example 12. The resistance measurement was performed using the same method as in Example 1.

### <<Comparative example 3»

A battery was produced using the same method as in Example 12 except that NCM not including a coating layer was used, and resistance measurement were performed.

**[Table 3]**

| | Solid electrolyte | Coating material | Polarization at start of discharge (V) | Resistance at start of discharge (ohm) |
|---|---|---|---|---|
| Example 12 | LPS | LiSO₃F | 0.0322 | 230 |
| Comparative example 3 | LPS | none | 0.0968 | 691 |

Table 3 presents the solid electrolyte, the coating material, the polarization at start of discharge, and the resistance at start of discharge of Examples 12 and Comparative example 3. The resistance at start of discharge was a value calculated from the polarization at start of discharge. Specifically, a difference between the open circuit voltage in a fully charged state and the closed circuit voltage at start of discharge was the value of polarization, and the resistance value was calculated by dividing polarization by the current value.

As presented in Table 3, the resistance of the battery of Example 12 was significantly lower than the resistance of the battery of Comparative example 3. When the sulfide solid electrolyte was used as the solid electrolyte, the effect of reducing the resistance was also obtained.

In this regard, the battery of Example 12 was produced using, for example, a so-called wet method. Specifically, a slurry was produced by dispersing the coated active material, the solid electrolyte, and the binder in an organic solvent, the slurry was applied to a collector, and the coating film was dried so as to produce a positive electrode plate. Since the effect due to the coating material was exerted even when these steps were performed, it is conjectured that the coating material was not dissolved in the solvent during production of the slurry. The reason for this is conjectured to be that the polarity of the solvent (THN) used for producing the slurry was lower than the polarity of the solvent (DMC) used for producing the coated active material. It is desirable that the δp value of the solvent used for producing the slurry be smaller than the δp value of the solvent used for producing the coating material.

### Industrial Applicability

The battery according to the present disclosure is utilized as, for example, all-solid secondary batteries.

### Reference Signs List

100 solid electrolyte
110 positive electrode active material
120 coating layer
130 coated active material
201 positive electrode
202 electrolyte layer
203 negative electrode
1000 positive electrode material
2000 battery

## Claims

1. A positive electrode material comprising:
a positive electrode active material;
a solid electrolyte; and
a coating material for coating the positive electrode active material,
wherein the coating material is denoted by Composition formula (1) below,
LiₐA_{b}X_{c} (1)
herein, each of a, b, and c is a positive real number,
A is at least one selected from the group consisting of N, P, and S, and
X contains at least F.

2. The positive electrode material according to claim 1,
wherein X contains O and F in Formula (1).

3. The positive electrode material according to claim 1 or claim 2,
wherein the coating material contains a SOₓF_{y} group.

4. The positive electrode material according to claim 3,
wherein the coating material contains Li, N, S, O, and F.

5. The positive electrode material according to claim 3,
wherein the coating material contains Li, S, O, and F.

6. The positive electrode material according to claim 2,
wherein the coating material contains a POₓF_{y} group.

7. The positive electrode material according to claim 6,
wherein the coating material contains Li, P, O, and F.

8. The positive electrode material according to claim 1,
wherein the coating material contains Li, P, and F.

9. The positive electrode material according to claim 1,
wherein the coating material contains at least one selected from the group consisting of LiSO₃F,_{,} LiN(SO₂F)₂, LiPO₂F₂, and LiPF₆.

10. The positive electrode material according to any one of claims 1 to 9,
wherein the ratio of the mass of the coating material to a total mass of the positive electrode active material and the coating material is greater than 0% by mass and is less than or equal to 10.0% by mass.

11. The positive electrode material according to any one of claims 1 to 10,
wherein the ratio of the mass of the coating material to a total mass of the positive electrode active material and the coating material is greater than 0% by mass and is less than or equal to 5.0% by mass.

12. The positive electrode material according to any one of claims 1 to 11,
wherein the ratio of the mass of the coating material to a total mass of the positive electrode active material and the coating material is greater than 0% by mass and is less than or equal to 3.0% by mass.

13. The positive electrode material according to any one of claims 1 to 12,
wherein a peak is present in the range of 685 ± 7 eV in an XPS spectrum of the coating material measured using an Al Kα ray.

14. The positive electrode material according to any one of claims 1 to 13,
wherein a layer thickness of the coating material is greater than or equal to 1 nm and is less than or equal to 100 nm.

15. The positive electrode material according to any one of claims 1 to 14,
wherein the solid electrolyte contains at least one selected from the group consisting of a sulfide solid electrolyte, a halide solid electrolyte, and an oxyhalide solid electrolyte.

16. The positive electrode material according to any one of claims 1 to 15,
wherein the positive electrode active material contains a lithium-containing transition metal oxide.

17. A battery comprising:
a positive electrode containing the positive electrode material according to any one of claims 1 to 16;
a negative electrode; and
an electrolyte layer disposed between the positive electrode and the negative electrode.

18. The battery according to claim 17,
wherein the electrolyte layer contains a sulfide solid electrolyte.

19. A method for producing a positive electrode material containing a positive electrode active material and a coating material for coating the positive electrode active material, the method comprising:
producing a solution containing the coating material and a first solvent;
producing a mixture by mixing the solution and the positive electrode active material; and
coating the positive electrode active material with the coating material by removing the first solvent from the mixture.

20. The method for producing the positive electrode material according to claim 19, wherein a slurry-like positive electrode material is produced using a second solvent in which the coating material is insoluble and kneading a solid electrolyte and the positive electrode active material coated with the coating material.
